# EUROPEAN PATENT SPECIFICATION

(11) **EP 0 482 394 B1**
(45) Date of publication and mention of the grant of the patent: **31.07.1996**
(21) Application number: 91116835.9
(22) Date of filing: 02.10.1991
(51) Int. Cl.: G02B 5/20, G02B 1/04

(54) **Narrow band radiation filter films**
Schmalbandstrahlungsfilter
Filtre à bande étroite contre les radiations électromagnétiques

(30) Priority: 23.10.1990 US 601977; 23.10.1990 US 601544
(43) Date of publication of application: 29.04.1992
(73) Proprietor: CYTEC TECHNOLOGY CORP., Wilmington, Delaware 19801 (US)
(72) Inventor: Panzer, Hans Peter, Stamford, Connecticut 06904 (US); Magliocco, Lino Giovanni, Shelton, Connecticut 06484 (US); Cohen, Martin Leonard, White Plains, New York (US); Yen, Wei S., Edison, New Jersey (US)
(74) Representative: Diehl, Hermann O. Th., Dr.

(56) References cited:
- US-A- 4 451 412
- US-A- 4 627 689
- US-A- 4 632 517

## Description

This invention was made with U.S. Government support under Subcontract Number 3382-1 awarded by University of Pittsburgh under Department of the Air Force Prime Contract Number F33615-88-C-5432. The U.S. Government has certain rights in this invention.

### FIELD OF THE INVENTION

The invention relates to improvements in narrow band radiation filters. More particularly, the invention provides a filter comprising a highly ordered crystalline array of microparticles fixed in a polymerized film. This filter has the ability to selectively diffract and thus filter a narrow band of radiation from a broader band of incident radiation.

### BACKGROUND OF THE INVENTION

Crystalline colloidal narrow band radiation filters were described in U.S. Patents Nos. 4,627,689 and 4,632,517, patented December 9, 1986 and December 30, 1986, respectively, to Sanford A. Asher. In accordance with the inventions described therein, electrically charged particles were dispersed in a dielectric liquid to form a colloidal dispersion. The liquid dispersion was contained in a thin planar cell within walls of transparent material such as methacrylate plastic, coated glass or quartz.

The highly ordered crystalline arrangement of colloidal particles that is needed for narrow band diffraction was obtained through use of a combination of optimum conditions for making and containing the colloidal suspension. A narrow band of radiation, less than 20 nm in width, supposedly could be selectively diffracted by the colloidal array filters described by Asher. In some preferred embodiments, Asher stated that more than 99% of radiation in a band width of less than 5 nm could be diffracted while more than 80% of the intensity of adjacent wavelengths was transmitted.

In the crystalline colloidal arrays described by Asher, electrically charged microspheres of polystyrene were suspended in a dielectric liquid, preferably in water, and the electrical interaction between charged particles in the suspension formed the crystalline array of the particles. In thin layers of such colloidal suspensions, contained in thin cells within walls of plastic or coated glass or quartz, a highly ordered crystalline array was achieved. The high degree of ordering of polystyrene microspheres within the crystalline colloidal structure was achieved by careful cleaning of the microspheres and the liquid medium to remove electrolytes and surfactant impurities therefrom and by using microspheres of uniform particle size to obtain a monodisperse suspension.

The wavelength of the light diffracted in such colloidal arrays is determined by the lattice spacing in the crystalline colloidal structure which in turn is determined by the size of the dispersed particles, the concentration of the colloidal particles in the medium, and the thickness of the colloidal layer. The band width of the diffracted light is narrowed as the degree of crystalline order in the suspension is increased.

The major deficiency associated with the colloidal arrays disclosed by Asher is their fragility. The lattice of the array may be destroyed when subjected to shock, temperature variations and ionic influences. This deficiency renders the arrays useless in filter applications.

The Asher U.S. Patent No. 4,627,689, mentioned above, also described a technique for making a filter in liquid medium with a concentration gradient, "and then 'freezing' the nonuniform condition, e.g., by polymerization techniques." No further description of a filter embodying that structure, nor of any "polymerization technique" was described.

U.S. Patent No. 4,451,412, patented May 29, 1984 to B. Loiseaux et al. describes a process for producing diffracting phase structures in a medium formed of microspheres of polystyrene suspended in a polymerizable liquid. An elementary holographic image was formed in the suspension by interference patterns. The image was then fixed by polymerization of the medium. For suspensions in organic liquids, the use of polymerizable acrylic monomers was described. For suspensions in aqueous medium, the use of water-soluble monomers, particularly acrylamide monomers, with diazo free radical initiators was described.

It has been found that a highly ordered crystalline array of polystyrene microspheres in a aqueous medium, as described by the Asher patents, cannot be fixed by the polymerization techniques described by the Loiseaux patent. This is due to the lack of a crosslinker and the ionic properties of the diazo initiators described in U.S. Patent No. 4,451,412, which are detrimental to maintaining the ordered array in the aqueous medium.

### DESCRIPTION OF THE FIGURES

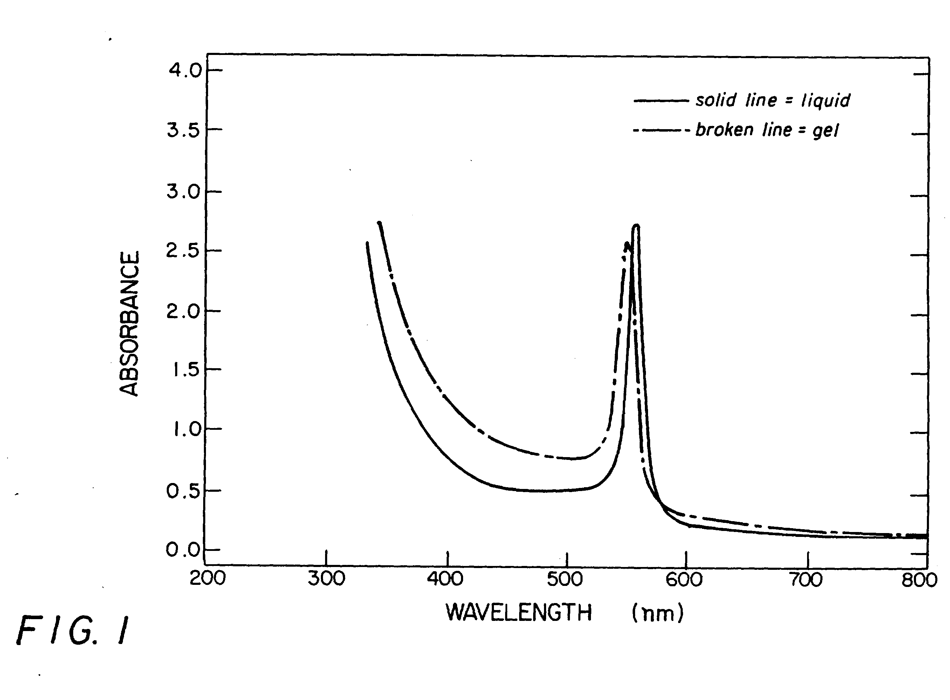

The present invention can be more readily understood through reference to attached Figures 1-5 which graphically present absorption spectra for both filters within the scope of the present invention and filters used for comparision therewith

### SUMMARY OF THE INVENTION

The present invention is directed to the narrow band radiation filter defined in Claim 1. This filter comprises a crystalline colloidal array of charged particles which array has been formed in a thin film of aqueous medium and has been fixed in a hydrogel film formed by polymerization of a mixture in said aqueous medium of a water-soluble crosslinking agent and acrylamide (or a mixture of acrylamide and a water-soluble comonomer).

### DESCRIPTION OF THE INVENTION

The crystalline array utilized in the practice of the present invention may be that described by Asher in the above-mentioned U.S. Patent No. 4,627,689. While such polystyrene microspheres may be obtained commercially, the colloidal array of the invention is made with microsphere particles obtained by copolymerization of styrene and a water-soluble vinyl or acrylic comonomer which bears an anionic group that cannot be easily hydrolyzed. The anionic group is sulfonate. One of the comonomers for this use is 1-sodium,1-allyloxy-2-hydroxypropane sulfonate (COPS-1). Other comonomers bearing anionic groups for copolymerization with styrene to make an emulsion of copolymerized microspheres for use in the invention include the sodium salt of styrene sulfonate, 2-acrylamido-2-methylpropane sulfonate, 3-sulfopropyl methacrylate potassium salt, and vinyl sulfonate.

In the copolymerized emulsion used in the production of the colloidal array, the anionic property of the polymerized comonomer has the effect of increasing surface charge density on the suspended copolymer particles. The increased surface charge seemingly intensifies electric forces which form and maintain the crystalline array in the aqueous medium, and thus strengthens the crystalline array in the liquid medium. One advantage of the use of such comonomer is that the copolymer emulsion will form into a highly ordered crystalline array much faster than a polystyrene emulsion. Another advantage is that the strengthened array can better resist stress during formation of a crosslinked hydrogel in the aqueous medium.

Regarding formation of the polymer to "fix" the crystalline array, we have found that combinations of acrylamide and crosslinking comonomers, which can be dissolved with an initiator in the aqueous medium in which a crystalline array is suspended are required for the practice of the present invention.

A suspension of electrically charged microspheres in an aqueous solution of acrylamide as the sole polymerizable monomer, when using charge-neutral initiators, can retain the crystalline order before polymerization. But upon polymerization of the dissolved monomer, a hydrogel film does not develop. The crystalline array in the resulting viscous liquid, if not lost entirely, is dissipated to a point that the degree of diffraction is reduced significantly. Use of a crosslinking comonomer is therefore necessary. The presence of a crosslinker leads to gels with low polymer entanglement densities (open pore structures), essential for accomodating colloidal crystals.

The acrylamide reactant used in the practice of the present invention may be partially replaced with a water soluble comonomer or mixtures thereof. Comonomers that form hydrogels are well known in the art and include, for example, vinyl pyrrolidone and hydroxyethylmethacrylic acid ester. Such comonomers may be used in place of up to about 70 % by weight of the acrylamide reactant, preferably no greater than about 50 % by weight. The term "acrylamide" as used herein should therefore be understood to include partial replacement with such comonomers unless otherwise specifically stated.

The crosslinking agents used with acrylamide have a crosslinking moiety which, upon polymerization to make the hydrogel, forms a crosslinked polymer network in the hydrogel and this tends to fix the suspended particles in the array. The crosslinking agent also assists formation of the hydrogel and strengthens the film so that a self supporting film can be made. The crosslinking agent for use with acrylamide in the practice of the invention is methylenebisacrylamide. Hydrogel films can be formed with some retention of the crystalline structure when as little as one part in one hundred parts by weight of the comonomer mixture is the crosslinking agent. Better retention of the crystalline structure is obtained with increasing proportions of the crosslinking agent in the polymerizable mixture and excellent retention of structure, with consequent excellent retention of the narrow band diffraction capability, using a ratio (on the basis of weight) of crosslinking agent to acrylamide of from about 1:5 to about 1:12. Preferred are ratios of about 1:8 to about 1:12. Especially preferred is a ratio of about 1:9.

In addition to monomer ratios, it has further been found that the total solids level of said monomers present in said aqueous solution is of significant influence on the properties of the filter produced therewith. Moreover, the total solids level and the monomer ratios have been found to be somewhat interdependent. Solids levels may vary from about 2 wt. % at a monomer ratio of about 1:49 to greater than about 20% at a monomer ratio of about 1:15. In respect to the preferred ratios of monomers, solids levels ranging from about 3 to about 9 wt. % are preferred.

The acrylamide, optional comonomer and crosslinking agent can be dissolved with the initiator in the aqueous medium for the crystalline array without disturbing the crystalline order. The mixture can be polymerized by action of the initiator upon exposure to actinic radiation to form a hydrogel in which the crystalline array is fixed and preserved. A film of this hydrogel with the fixed crystalline array can then function as a diffracting filter. In preferred embodiments, upon polymerization of the dissolved comonomers, the crystalline order is preserved in the hydrogel to the extent that it can selectively diffract a narrow band with practically the same effectiveness as before polymerization.

A photosensitive, charge-neutral, free radical initiator maybe used in the practice of the present invention. A heat sensitive free radical initiator which can be activated at moderate temperature may also be employed, as such, or in combination with activating light. Some suitable free radical initiators for use in the invention include the preferred benzoin methyl ether, as well as benzoin ethyl ether, succinic acid peroxide, 2-hydroxy-2-methyl-1-phenylpropan-1-one, 4-(2-hydroxyethoxy)-phenyl-(2-propyl)ketone, 2,2'azobis(2,4-dimethyl-4-methoxyvalero)nitrile, and azobisisobutyonitrile, for example. The initiator may be dissolved in a water soluble solvent such as isopropyl alcohol or ethylene glycol, to improve dispersion of the initiator in the aqueous solution. Very small catalytic amounts of the initiator, usually less than one percent by weight of the solution are effective for the purpose of the invention.

Initiators are preferably employed in amounts ranging from 0.001 to about 1 wt. % based upon total weight of the monomer(s). It is especially preferred to employ initiators in an amount of about 0.01 on the same basis. One object of the invention is to provide a highly ordered crystalline colloidal array filter of the kind described, suspended in a thin film of a polymerized hydrogel instead of a dielectric liquid medium. One advantage of the invention is that the highly ordered crystalline array of colloidal particles, after it is fixed in the hydrogel by polymerization, no longer depends on the interactive electric forces of charged particles to maintain the crystalline structure. The fixed array in the polymerized medium is no longer sensitive to changes in temperature (such as freezing) or to electrical fields or to mechanical shock, which could cause the crystalline array in liquids to change or dissipate.

Another advantage of the invention is that the filter, as a thin layer of the dispersion in a hydrogel, in some preferred embodiments can be a self-supporting polymeric film or membrane, without the need for cell walls to contain the filter.

It has further been found that the addition of simple sugars, such as sucrose, fructose, lactose and glucose, or other polyhydric alcohols, such as ethylene and propylene glycols, further enhances the stability of the filters to freezing temperatures which heretofore would totally destroy the filtering ability of said filter even following its thaw. Such sugars and polyols may be added in amounts ranging from 0.01 weight % based upon the weight of the acrylamide up to the limit of their solubility in said aqueous medium. It is preferred that such sugars and polyols be present in amounts ranging from about 0.01 to about 25 weight % on the same basis. It is especially preferred that such sugars and polyols be present in amounts ranging from about 0.1 to about 25 weight % on the same basis.

### EXAMPLE 1

The following procedure is used to prepare a preferred copolymer latex for use in the invention. Three solutions are premixed to be used for the emulsion polymerization. These are as follows:
1. Solution for the Aqueous Phase
   - Distilled Water 103.50 gms.
   - Sodium Bicarbonate 0.14 gms.
   - Aerosol MA-80 2.10 gms.
   - Water Soluble
      Comonomer (Cops-1) variable
      (2.36 gms. of a 40% stock solution were used for the latexes)
2. Solution for the Monomer Phase
   - Styrene (distilled) 45.15 gms.
   - Divinylbenzene (distilled) 2.50 ml
3. Initiator Solution
   - Potassium Persulfate 14.40 gms.
   - Distilled Water 180.00 gms.

The aqueous phase is placed in the reaction flask and heated to 95°C in a constant temperature water bath. The monomer phase is added by a dropping funnel in a steady stream and the two phases are allowed to equilibrate to reaction temperature. A continuous stream of nitrogen is bubbled through the mixture until stirring of the mixture has begun. In a separate flask, the initiator solution is also purged of oxygen with bubbling nitrogen. Using a syringe, 8.5 ml of the initiator solution is injected into the reaction flask through a septum. The mixture is continuously stirred at a constant rate of 200 rpm, using a constant torque stirrer for six hours. Throughout the reaction, nitrogen blankets the mixture.

Upon completion of the reaction, the solution is filtered through glass wool to remove coagulum and large macroscopic particles, then dialyzed against distilled water containing mixed bed ion exchange resin for 2 to 4 weeks. The dialyzed latex has an average particle diameter of 107 nm, a polydispersity index (PDI) of 1.039, surface charge density of 9.21 uC/cm and a solids content of 23.2 percent by weight. This dialyzed copolymer latex is used in all of the following Examples with the exception of Example 5 where a similar latex is utilized.

### EXAMPLE 2

A solidified colloidal array filter was made using 5.5ml of the dialyzed copolymer latex described above combined with 5.0ml of an aqueous comonomer/crosslinker solution, 2.0ml of a photoinitiator solution and 7.5ml of distilled water. The comonomer/crosslinker solution consists of a 40% solids aqueous solution of acrylamide(AMD) and N,N methylenebisacrylamide (MBA) in a 9/l AMD/MBA ratio (10% MBA). The photoinitiator solution consists of 0.2 grams of benzoin methyl ether (BME) in 99.8 grams of ethylene glycol. In this mixture, microspheres constitute about 6.3% by wt and the comonomers about 10% by wt. of the mixture. The mixture is placed in a small glass vial along with particulate mixed bed ion exchange resin (Dowex MR-12) and stirred using a vortex mixer. The solution is placed under vacuum for 5 minutes to remove oxygen from the solution.

A portion of the degassed solution is decanted from the vial and placed dropwise on a cleaned quartz plate. A second cleaned quartz plate is then placed on top, spreading the latex/monomer solution between the plates to form an enclosed film of the liquid between the plates. The excess liquid is removed and the assembly is placed under a BlackRay Longwave UV ultraviolet lamp (UVP Inc., San Gabriel, CA) for ten minutes causing polymerization and the consequent forming of a hydrogel. After the crystalline array is formed in the thin film between the plates and before the liquid suspension is polymerized, an absorbance spectrum for the array is measured in the visible light range. A narrow diffraction band is observed at about 555 nm in which more than 99% of the radiation is diffracted. Thus the suspension in the monomer solution was found to be an efficient narrow band filter. After polymerization, another absorbance spectrum is measured and the diffraction pattern for the hydrogel is slightly shifted to 547 nm maximum but otherwise is practically the same as that for the liquid suspension. The absorbance spectra for those measurements are shown in FIG.1. This demonstrates that the highly ordered crystalline array is preserved in the hydrogel. The polymerized film is removed from between the plates and remains a self supporting flexible film which can be used as a narrow band radiation filter.

### COMPARATIVE EXAMPLE 1

An attempt to make a solidified colloidal array hydrogel filter was made using a latex described in Example 1 above, which has been diluted with deionized water to a solids content of 9.0 percent, and using acrylamide as the water soluble monomer without a crosslimker. In this case 1.0 ml. of the latex was mixed with 1.25 ml. of 40% solids stock solution of of AMP in distilled water along with 0.25 ml of a 0.2% solution of BME in ethylene glycol. This results in a final AMP concentration of 20% solids by weight.

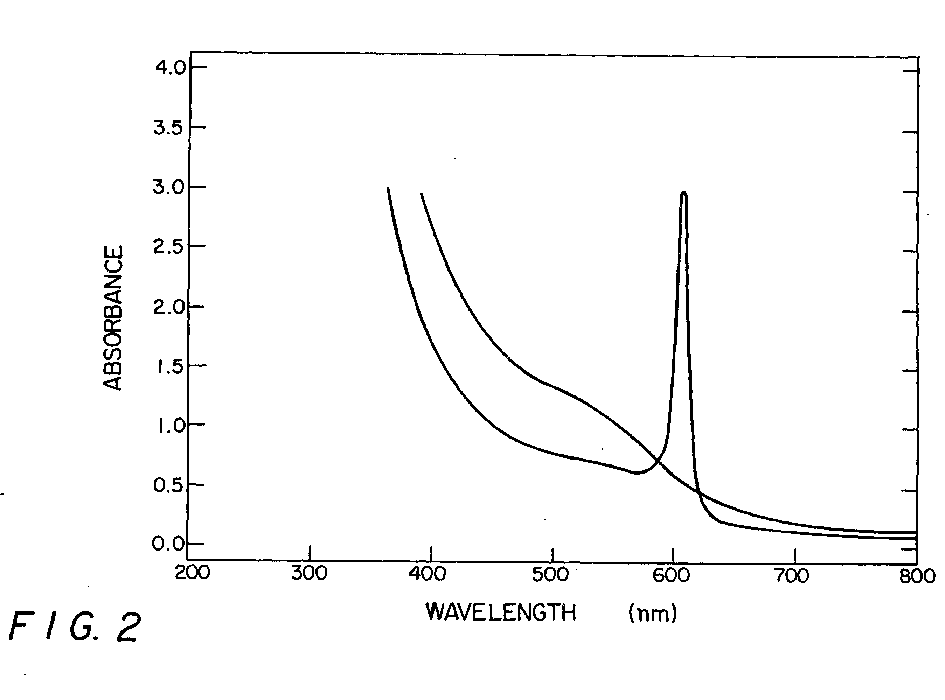

After the application of UV radiation for about 16 hours with the UV source used in Example 2, the system did not solidify into a self-supporting film. The absorbance spectra, before and after exposure, in Fig. 2. No diffraction peak is obtained after exposure to the UV source, indicating that the crystalline array no longer exists. This indicates the disordering effect that a concentrated, crosslinker-free, highly entangled polymer network can have on the colloidal array crystal.

### EXAMPLE 3

A solidified colloidal array hydrogel filter was made using 1.2ml of a diluted latex from Example 1 combined with 0.5ml of an aqueous monomer/crosslinker solution and 0.1 ml of a photoinitiator solution. The latex is the same as that described in Example 1 but it has been diluted to solids content of 11.9 percent by weight. The monomer/crosslinker solution consists of 40% aqueous solution of acrylamide(AMD) and N,N methylenebisacrylamide(MBA) in a 49/l AMP/MBA ratio by wt (2%MDA). The photoinitiator solution consists of 0.2 grams of 0.2% by wt benzoin methyl ether (BME) in isopropyl alcohol. The mixture contains 9% by wt of microspheres and 20 % by wt of AMD. The mixture was purified with ion-exchange resin and degassed by the procedures described in Example 2.

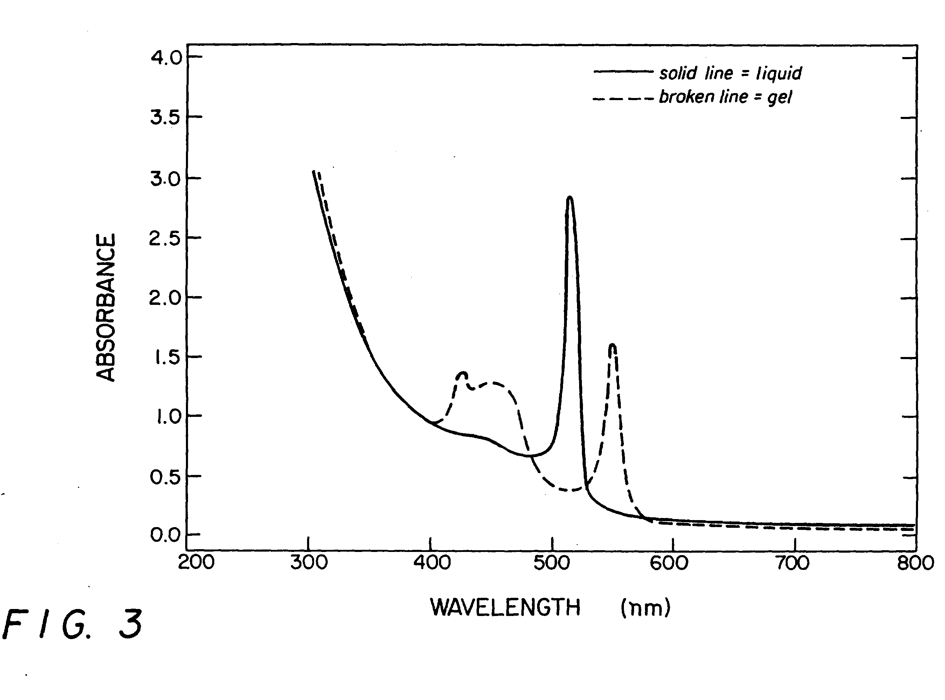

A portion of the degassed solution was placed dropwise on a cleaned quartz plate, and a second cleaned quartz plate was placed on top spreading the latex/monomer solution between the plates. The excess was removed and the solution was exposed to UV radiation as in Example 2. On polymerization, a hydrogel film is obtained. Absorption patterns for the solution before and after exposure are shown in Fig 3. The double peak diffraction pattern for the polymerized film shows that a crystalline array is retained in the hydrogel, but with some distortion which causes the double peak pattern.

### EXAMPLE 4

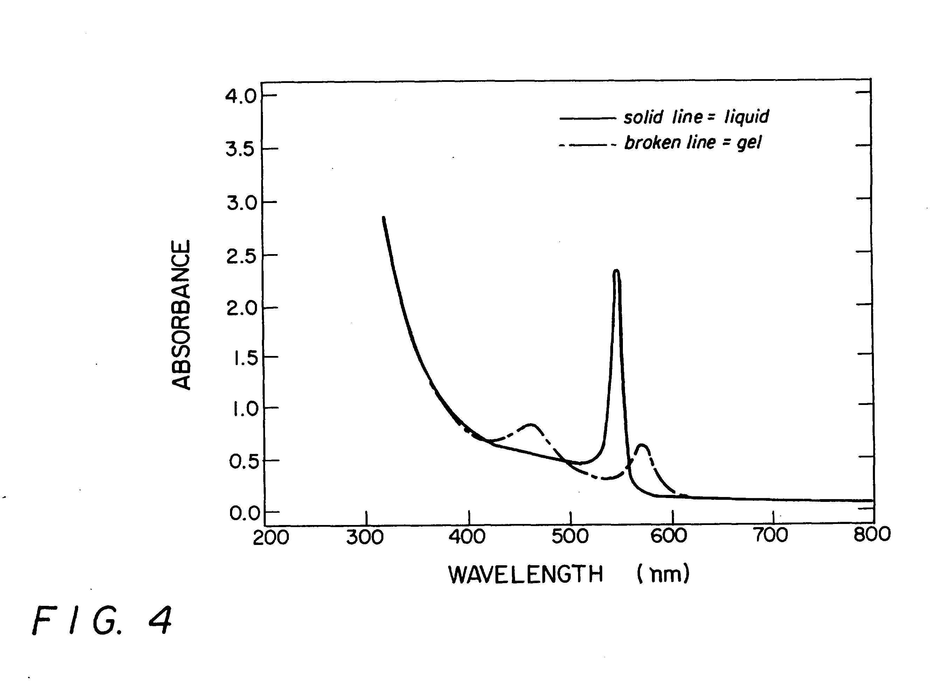

A solidified colloidal array filter is made using 0.8ml of the latex from Example 1 combined with 1.Oml of an aqueous 40% by wt solution of 99/l AMD/MBA solution (1% MDA) and 0.2 ml of the 0.2% photoinitiator solution used in Example 2. The mixture contains 9.2% by wt of microspheres and 20% by wt of comonomers. The mixture is purified and formed into thin film and irradiated as described in the Examples above. Exposure time is ten minutes. A hydrogel film is formed. Absorption spectra before and after polymerization are shown in Fig 4. Comparison of Figs 2 and 4 shows that even one percent of the crosslinking comonomer with acrylamide can cause a hydrogel to form and retain at least some crystalline structure as shown by the two diffraction peaks in the spectrum for the hydrogel film in Fig. 4.

### EXAMPLE 5

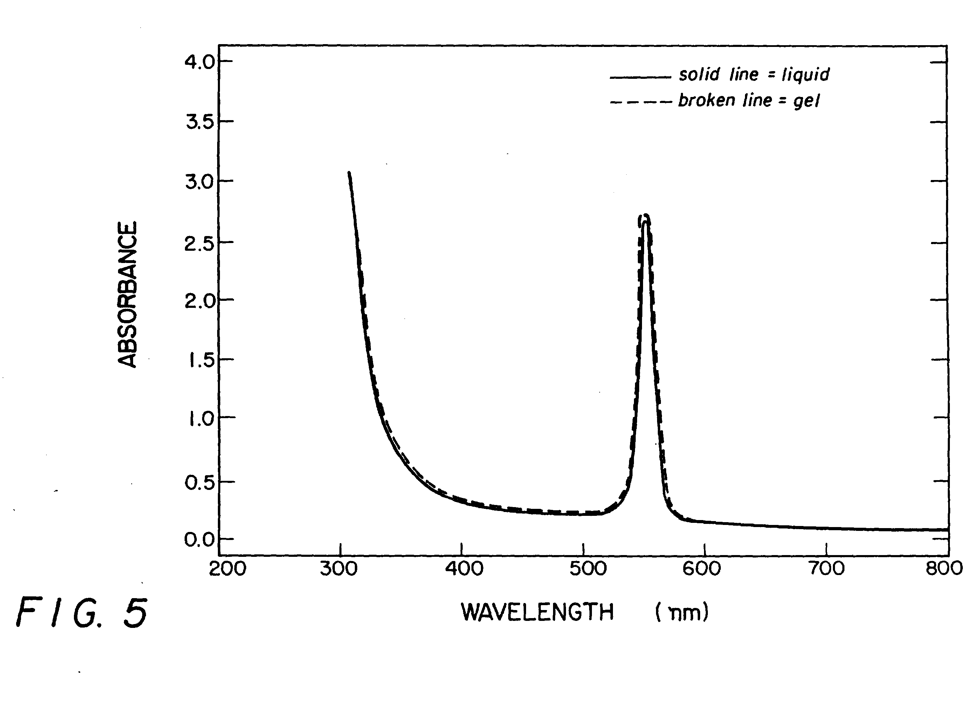

A solidified colloidal array filter is made using 1.8 ml of dialyzed copolymer latex having the following properties: average particle diameter = 109 nm, PDI = 1.02, solids content = 14.2 wt. %). The latex is combined with 0.5 ml of an aqueous comonomer/crosslinking agent solution (12/l AMD/MBA, 20 % by weight), 0.2 ml of a photoinitiator solution and 0.5 ml of an aqueous sucrose solution (57.6% by weight). The mixture is then purified and formed into a thin film which is irradiated as described in the above Examples. The exposure time for such irradiation is ten minutes and a hydrogel is formed. Adsorption spectra before and after polymerization are shown in Figure 5. No change in the absorption spectra is found after polymerization.

The filter is then subjected to temperatures of from -15 to -20 degrees Centigrade overnight. Once thawed, the filter is found to substantially retain its initial filtering capabilities.

## Claims

1. A narrow band radiation filter comprising a crystalline colloidal array of charged particles of polystyrene fixed in a self-supporting polymeric film, characterized in that the charged particles consist of a copolymer of styrene and a comonomer selected from the group consisting of 1-sodium,1-allyloxy-2-hydroxyl-propane sulfonate, sodium salt of styrene sulfonate, 2-acrylamido-2-methylpropane sulfonate, 3-sulfopropylmethacrylate potassium salt and vinyl sulfonate, and in that the polymeric film consists of a polymeric hydrogel of acrylamide, an optional water-soluble comonomer of vinyl pyrrolidone or hydroxyethylmethacrylic acid ester, and N,N-methylenebisacrylamide as a crosslinking agent.

2. The radiation filter according to claim 1, wherein the water soluble comonomer is present in an amount less than about 70% by weight of the total weight of the acrylamide and said comonomer.

3. The radiation filter according to claim 1 or 2, wherein the water soluble comonomer is present in an amount less than about 50% by weight of the total weight of the acrylamide and said comonomer.

4. The radiation filter according to any of claims 1 to 3, wherein the filter has been formed in a thin film of aqueous medium and fixed in a hydrogel film formed by polymerization of said polymeric hydrogel in said aqueous medium.

5. The radiation filter according to any of claims 1 to 4, wherein the crosslinking agent is present in an amount of at least one part per one hundred parts by weight of the mixture of crosslinking agent, acrylamide, and said water-soluble comonomer if said comonomer is present.

6. The radiation filter according to claim 4, or claim 5 as appendant to claim 4, wherein the polymerization is initiated by photoactivation of a charge neutral, free radical photoinitiator in said aqueous medium.

7. The radiation filter according to claim 4, claim 5 as appendant to claim 4, or claim 6, wherein the polymerization is initiated by the application of heat to a charge neutral, free radical heat sensitive initiator in said aqueous medium.

8. The radiation filter according to claim 6, wherein the photoinitiator is benzoin methyl ether.

9. The radiation filter according to claim 6 or 8, wherein the photoinitiator is present in an amount of 0.001 to about 1 wt. % based upon the total weight of acrylamide, or acrylamide and water soluble comonomer if said comonomer is present.

10. The radiation filter according to claim 9, wherein the photoinitiator is present in an amount of about 0.01 wt. % based upon the total weight of acrylamide, or acrylamide and water soluble comonomer if said comonomer is present.

11. The radiation filter according to any of claims 1 to 10, wherein the ratio of crosslinking agent to acrylamide, or acrylamide and water soluble comonomer, is of about 1:5 to about 1:12 on a weight basis.

12. The radiation filter according to claim 11, wherein the ratio of crosslinking agent to acrylamide, or acrylamide and water soluble comonomer, is of about 1:8 to about 1:12 on a weight basis.

13. The radiation filter according to any of claims 1 to 12, wherein the aqueous mixture constituted by the solution of said polymeric hydrogel in the corresponding aqueous medium comprises from about 2 to about 20 wt. % of the monomers constituting said polymeric hydrogel.

14. The radiation filter according to claim 13, wherein said aqueous mixture comprises from about 3 to about 9 wt. % of said monomers.

15. The radiation filter according to claim 13 or 14, wherein said aqueous mixture comprises said water soluble comonomer.

16. The radiation filter according to any of claims 1 to 15, wherein the polymeric hydrogel comprises a simple sugar, polyhydric alcohol or mixture thereof.

17. The radiation filter according to claim 16, wherein the simple sugar is sucrose, fructose, lactose, glucose or a mixture thereof.

18. The radiation filter according to claim 16 or 17, wherein the polyhydric alcohol is ethylene glycol, propylene glycol or a mixture thereof.

## Patentansprüche

1. Schmalbandstrahlungsfilter mit einer kristallinen kolloidalen Anordnung geladener Partikel von Polystyrol, welche in einem selbsttragenden Polymerfilm fixiert ist, dadurch gekennzeichnet, daß die geladenenen Partikel aus einem Copolymer von Styrol und einem Comonomer ausgewählt aus der Gruppe bestehend aus 1-Natrium-1-allyloxy-2-hydroxylpropansulfonat, Natriumsalz von Styrolsulfonat, 2-Acrylamid-2-methylpropansulfonat, 3-Sulfopropylmethacrylatkaliumsalz und Vinylsulfonat bestehen, und daß der Polymerfilm aus einem Polymerhydrogel von Acrylamid, einem wahlweisen wasserlöslichen Comonomer von Vinylpyrrolidon oder Hydroxyethylmethacrylsäureester und N,N-Methylenbisacrylamid als Vernetzungsmittel besteht.

2. Strahlungsfilter gemäß Anspruch 1, bei dem das wasserlösliche Comonomer in einer Menge von weniger als etwa 70 Gew.% des Gesamtgewichts des Acrylamids und des Comonomers vorliegt.

3. Strahlungsfilter gemäß Anspruch 1 oder 2, bei dem das wasserlösliche Comonomer in einer Menge von weniger als etwa 50 Gew.% des Gesamtgewichts des Acrylamids und des Comonomers vorliegt.

4. Strahlungsfilter gemäß einem der Ansprüche 1 bis 3, bei dem der Filter in einem dünnen Film wäßrigen Mediums gebildet wurde und in einem Hydrogelfilm, gebildet durch Polymerisation des Polymerhydrogels in dem wäßrigen Medium, fixiert wurde.

5. Strahlungsfilter gemäß einem der Ansprüche 1 bis 4, bei dem das Vernetzungsmittel in einer Menge von mindestens 1 zu 100 Gewichtsteilen der Mischung aus Vernetzungsmittel, Acrylamid und wasserlöslichem Comonomer, falls das Comonomer vorhanden ist, vorliegt.

6. Strahlungsfilter gemäß Anspruch 4 oder Anspruch 5, soweit abhängig von Anspruch 4, bei dem die Polymerisation durch Photoaktivierung eines ladungsneutralen Radikalphotoinitiators in dem wäßrigen Medium eingeleitet ist.

7. Strahlungsfilter gemäß Anspruch 4, Anspruch 5, soweit abhängig von Anspruch 4, oder Anspruch 6, bei dem die Polymerisation durch die Anwendung von Wärme auf einen ladungsneutralen, wärmeempfindlichen Radikalinitiator in dem wäßrigen Medium eingeleitet ist.

8. Strahlungsfilter gemäß Anspruch 6, bei dem der Photoinitiator Benzoinmethylether ist.

9. Strahlungsfilter gemäß Anspruch 6 oder 8, bei dem der Photoinitiator in einer Menge von 0,001 bis etwa 1 Gew.% bezogen auf das Gesamtgewicht von Acrylamid oder Acrylamid und wasserlöslichem Comonomer bei Vorliegen des Comonomers vorliegt.

10. Strahlungsfilter gemäß Anspruch 9, bei dem der Photoinitiator in einer Menge von etwa 0,01 Gew.% bezogen auf das Gesamtgewicht von Acrylamid oder Acrylamid und wasserlöslichem Comonomer bei Vorliegen des Comonomers vorliegt.

11. Strahlungsfilter gemäß einem der Ansprüche 1 bis 10, bei dem das Verhältnis von Vernetzungsmittel zu Acrylamid oder Acrylamid und wasserlöslichem Comonomer auf einer Gewichtsbasis etwa 1:5 bis etwa 1:12 beträgt.

12. Strahlungsfilter gemäß Anspruch 11, bei dem das Verhältnis von Vernetzungsmittel zu Acrylamid oder Acrylamid und wasserlöslichem Comonomer auf einer Gewichtsbasis etwa 1:8 bis etwa 1:12 beträgt.

13. Strahlungsfilter gemäß einem der Ansprüche 1 bis 12, bei dem die wäßrige Mischung, dargestellt durch die Lösung des Polymerhydrogels in dem entsprechenden wäßrigen Medium, etwa 2 bis etwa 20 Gew.% der Monomere, dargestellt durch das Polymerhydrogel, enthält.

14. Strahlungsfilter gemäß Anspruch 13, bei dem die wäßrige Mischung etwa 3 bis etwa 9 Gew.% des Monomers enthält.

15. Strahlungsfilter gemäß Anspruch 13 oder 14, bei dem die wäßrige Mischung das wasserlösliche Comonomer enthält.

16. Strahlungsfilter gemäß einem der Ansprüche 1 bis 15, bei dem das Polymerhydrogel einen einfachen Zucker, einen Polyalkohol oder eine Mischung davon aufweist.

17. Strahlungsfilter gemäß Anspruch 16, bei dem der einfache Zucker Sucrose, Fructose, Lactose, Glucose oder eine Mischung davon ist.

18. Strahlungsfilter gemäß Anspruch 16 oder 17, bei dem der Polyalkohol Ethylenglycol, Propylenglycol oder eine Mischung davon ist.

## Revendications

1. Filtre à bande étroite contre les rayonnements comprenant un réseau cristallin colloïdal de particules chargées de polystyrène fixées dans un film polymère autoporteur, caractérisé en ce que les particules chargées sont constituées d'un copolymère du styrène et d'un comonomère choisi dans le groupe constitué par le 1-sodium-1-allyloxy-2-hydroxypropanesulfonate, le sel de sodium du styrènesulfonate, le 2-acrylamido-2-méthylpropanesulfonate, le sel de potassium du méthacrylate de 3-sulfopropyle et le vinylsulfonate, et en ce que le film polymère est constitué d'un acrylamide hydrogel polymère, d'un comonomère hydrosoluble facultatif du type de la vinylpyrrolidone ou d'un ester de l'acide hydroxyéthylméthacrylique, et de N,N-méthylènebisacrylamide comme agent de réticulation.

2. Filtre contre les rayonnements selon la revendication 1, dans lequel le comonomère hydrosoluble est présent à raison de moins d'environ 70% en poids du poids total de l'acrylamide et dudit comonomère.

3. Filtre contre les rayonnements selon la revendication 1 ou 2, dans lequel le comonomère hydrosoluble est présent à raison de moins d'environ 50% en poids du poids total de l'acrylamide et dudit comonomère.

4. Filtre contre les rayonnements selon l'une quelconque des revendications 1 à 3, dans lequel le filtre a été mis sous la forme d'un film mince constitué d'un milieu aqueux et fixé dans un film d'hydrogel formé par polymérisation dudit hydrogel polymère dans ledit milieu aqueux.

5. Filtre contre les rayonnements selon l'une quelconque des revendications 1 à 4, dans lequel l'agent de réticulation est présent à raison d'au moins une partie pour cent parties en poids du mélange de l'agent de réticulation, de l'acrylamide et dudit comonomère hydrosoluble, si ledit comonomère est présent.

6. Filtre contre les rayonnements selon la revendication 4 ou la revendication 5 en tant que revendication dépendante de la revendication 4, dans lequel la polymérisation est initiée par photoactivation d'un photoinitiateur radicalaire, à charge neutre, dans ledit milieu aqueux.

7. Filtre contre les rayonnements selon la revendication 4, la revendication 5 en tant que revendication dépendante de la revendication 4 ou la revendication 6, dans lequel la polymérisation est initiée par chauffage d'un initiateur radicalaire, sensible à la chaleur, à charge neutre , dans ledit milieu aqueux.

8. Filtre contre les rayonnements selon la revendication 6, dans lequel le photoinitiateur est le benzoïne-méthyléther.

9. Filtre contre les rayonnements selon la revendication 6 ou 8, dans lequel le photoinitiateur est présent à raison de 0,001 à environ 1% en poids, par rapport au poids total de l'acrylamide, ou de l'acrylamide et du comonomère hydrosoluble, si ledit comonomère est présent.

10. Filtre contre les rayonnements selon la revendication 9, dans lequel le photoinitiateur est présent à raison d'environ 0,01% en poids, par rapport au poids total de l'acrylamide, ou de l'acrylamide et du comonomère hydrosoluble, si ledit comonomère est présent.

11. Filtre contre les rayonnements selon l'une quelconque des revendications 1 à 10, dans lequel le rapport de l'agent de réticulation à l'acrylamide, ou à l'acrylamide et au comonomère hydrosoluble, est d'environ 1:5 à environ 1:12, sur une base pondérale.

12. Filtre contre les rayonnements selon la revendication 11, dans lequel le rapport de l'agent de réticulation à l'acrylamide, ou à l'acrylamide et au comonomère hydrosoluble, est d'environ 1:8 à environ 1:12, sur une base pondérale.

13. Filtre contre les rayonnements selon l'une quelconque des revendications de 1 à 12, dans lequel le mélange aqueux, constitué de la solution dudit hydrogel polymère dans le milieu aqueux correspondant, comprend d'environ 2 à environ 20% en poids des monomères constituant ledit hydrogel polymère.

14. Filtre contre les rayonnements selon la revendication 13, dans lequel ledit mélange aqueux comprend d'environ 3 à environ 9% en poids desdits monomères.

15. Filtre contre les rayonnements selon la revendication 13 ou 14, dans lequel ledit milieu aqueux comprend ledit comonomère hydrosoluble.

16. Filtre contre les rayonnements selon l'une quelconque des revendications 1 à 15, dans lequel l'hydrogel polymère comprend un sucre simple, un polyol ou un mélange de ceux-ci.

17. Filtre contre les rayonnements selon la revendication 16, dans lequel le sucre simple est le saccharose, le fructose, le lactose, le glucose ou un mélange de ceux-ci.

18. Filtre contre les rayonnements selon la revendication 16 ou 17, dans lequel le polyol est l'éthylèneglycol, le propylèneglycol ou un mélange de ceux-ci.
